# EUROPEAN PATENT SPECIFICATION

(11) **EP 0 312 991 B1**
(45) Date of publication and mention of the grant of the patent: **01.02.1995**
(21) Application number: 88117342.1
(22) Date of filing: 18.10.1988
(51) Int. Cl.: G05B 19/04

(54) **Method of sequential monitoring and system thereof**
Verfahren und System zur sequenziellen Steuerung
Méthode et système de commande séquentielle

(30) Priority: 19.10.1987 JP 263236/87
(43) Date of publication of application: 26.04.1989
(73) Proprietor: FUJI PHOTO FILM CO., LTD., Kanagawa 250-01 (JP)
(72) Inventor: Nagai, Tetsuji, Minami Ashigara-shi Kanagawa (JP); Torii, Katsura, Minami Ashigara-shi Kanagawa (JP); Ohno, Yoshio, Minami Ashigara-shi Kanagawa (JP)
(74) Representative: Grünecker, Kinkeldey, Stockmair & Schwanhäusser Anwaltssozietät

(56) References cited:
- EP-A- 0 004 907
- WO-A-86/04432
- FR-A- 2 100 600
- FR-A- 2 544 099
- GB-A- 2 067 307
- PATENT ABSTRACTS OF JAPAN vol. 10, no. 106 (P-449)(2163) 22 April 1986,& JP-A-60 238906 (MISUZU ERII K.K.) 27 November 1985,
- PATENT ABSTRACTS OF JAPAN vol. 9, no. 262 (P-398)(1985) 19 October 1985,& JP-A-60 112107 (TOYOTA JIDOSHA K.K.) 18 June 1985,

## Description

### BACKGROUND OF THE INVENTION

### 1. Field of the Invention

The present invention relates to a method and system of sequential monitoring for monitoring working state of a production line.

### 2. Prior Art

Automized production facilities usually include production lines in which products or partially-fablicated products to be processed are transferred by belt conveyers or the like and applied with various works according to the predetermined sequences. If an abnormal state about transferring or works occurs in a production line, the operation of the line is urgently stopped to avoid that the abnormal state would escalate into a more serious trouble.

For monitoring the working state of the production line, detectors such as a microswitch are provided in the production line and the electrical outputs of the detectors are fed to a sequence diagnostic apparatus as disclosed in, for example, Japanese Patent Kokai No. 59-62912. The sequence diagnostic apparatus evaluates the state of the production line based on the timing of the outputs of the detectors and generates triggering signals such as an emergency signal upon detecting an abnormal state. In the production line, if the triggering signals are output to stop the operation of the production line urgently, the apparatus reads out the data stored in the memories, for making an analysis of the cause of the abnormal state. The data is of the processes of the works and printed out on data sheets in predetermined format.

Similarly, prior art FR-A-2 544 099 describes such a method to monitor and locate faults in an automated production line. To begin with, reference data concerning the time intervals for carrying out the individual steps in a production cycle have to be established. Next, a comparison is made between the actual measured values and the stored reference values in order to detect any fault occuring in the system.

In such conventional sequence monitoring methods since reference data used for judgement of an abnormal state should be previously input in the sequence diagnostic apparatus, work concerning input of the data and calculation for the reference data is troublesome. Further, when the material, kind, or size of the products or partially fabricated products to be processed is changed, the sequence of the product line accordingly changes and therefore new data should be input in the sequence diagnostic apparatus, thus limiting its wide practical uses. Since the triggering signals are output only in the case of an abnormal state of the production line which should be stopped, the stage that the line is gradualy changing towards an abnormal state can not be found. That is, the conventional method and its system can not prevent abnormal states. Furtherly, since the sequence diagnostic apparatus outputs all of the data, it takes longer time to analyze the data of the abnormal state, especially to specify the troubled work.

### OBJECT OF THE PRESENT INVENTION

It is therefore the object of the present invention to provide a method and system of sequential monitoring to monitor the working state of a production line which makes it possible to know the stage when the production line is gradually changing towards an abnormal state before the production line falls into the abnormal state.

It is another object of the present invention to provide a method and system of sequential monitoring to monitor the working state of a production line which can be used in manufacturing.

### SUMMARY OF THE INVENTION

For achieving the above and other objects the present invention provides a method of sequential monitoring to monitor a production line which includes working groups whose work operations are controlled by a sequential controller, comprising the steps set out in claim 1.

Further, the present invention provides an apparatus for carrying out the given method comprising the features set out in claim 7.

According to the present invention, sequential works of each block are monitored by a sequential pattern for the block having the same working pattern each working cycle. When an abnormal operation occurs in the production line, it is easy to find which working block has fallen into trouble. Moreover, the monitoring can be performed independent of the sequential control of the sequential controller of the production line, confirming that the operation is normal.

### BRIEF DESCRIPTION OF THE DRAWINGS

Above objects and features of the invention will be apparent by reference to the following description, taken in connection with the accompanying drawings, in which:
Figure 1 is a schematic block diagram of an embodiment of a production line according to the present invention;
Figure 2 is schematic diagram of an isolator used in the embodiment of Figure 1;
Figure 3 is a time chart which illustrates the operation of an inspection block of Figure 1; and
Figure 4 is a time chart which illustrates the operation of a web-winding block of figure 1.

### DETAILED DESCRIPTION OF THE INVENTION

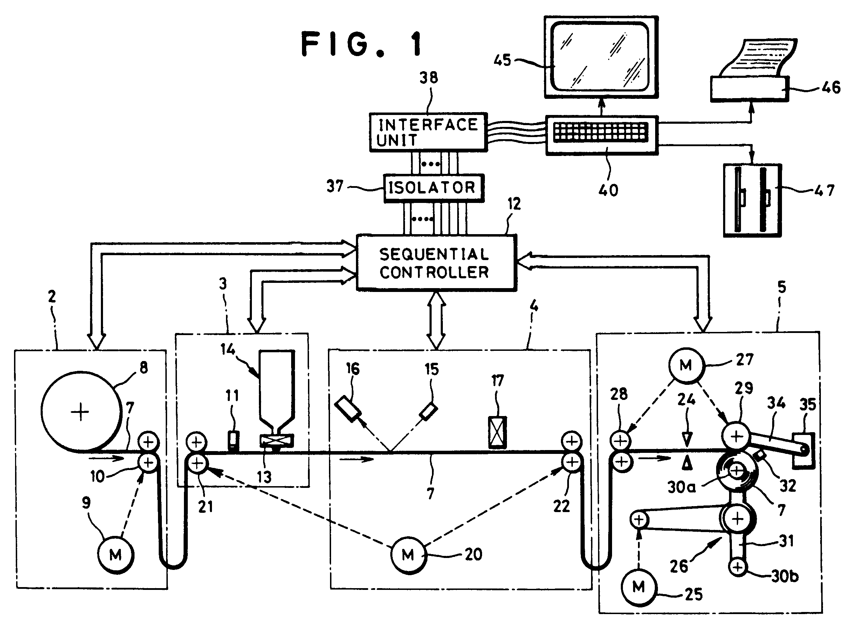

Referring to Figure 1 shown an embodiment of a production line according to the present invention, a web is transferred at a constant speed, being applied with emulsion on its surface. The thickness of the emulsion layer is inspected with a detector and thereafter the web is wound around a reel. The production line has working blocks: web-supplying block 2; emulsion-applying block 3; inspection block 4; and web-winding block 5. In each block, a web 7 is applied with a work or works.

In the web-supplying block 2, the web 7 is drawn out from a supplying reel 8 to transport to the emulsion-applying block 3 through a pair of supplying rollers 10. The supplying rollers 10 are driven by a motor 9 which is controlled at a constant running speed with operation signals fed from a sequential controller 12.

Provided in th emulsion-applying block 3 is a line sensor 11 which optically detects the presence of the web 7 and measures the width. That is also an applier 14 having a nozzle 13 which applies emulsion on the moving web 7 to make an emulsion layer on the surface of the web 7 at a predetermined thickness. The applier 14 has a solenoid valve and so forth for the application and has a function of changing the width of the application of emulsion on the web 7.

The inspection block 4 is provided with a light-emitting unit 15, a light-receiving unit 16, a puncher 17, and a pair of driving rollers 22. The light-emitting unit 15 projects a laser beam on the surface of the running web 7 with the beam scanning in the transverse direction of web 7. The frequency of the laser is selected so as to give no influences on the emulsion. The light-receiving unit 16 comprises light-receiving elements which are arranged in a row parallel to the transverse direction of the web 7 to receive the part of the laser reflected from the surface of the web 7. The light-receiving unit 15 sends signals representing the received light intensity. If the emulsion is unevenly applied on the web 7, the sequential controller 12 finds the area of the unevenly applied emulsion layer based on the signals from the light-receiving unit 15 and sends command signals to a puncher 17. The puncher 17 punches holes in the web 7 at the beginning and end of the unevenly applied area. The punched unevenly applied area of the web 7 is cut off at another processing for the web 7. In the emulsion-applying and inspection blocks 3 and 4, the driving rollers 21, 22 driven by a common motor 20 feed the web 7 at the same constant speed as the feeding speed of the motor 10.

The web-winding block 5 has a cutter 24, a pair of rollers 28 driven by a motor 27, a nip roller 29, web-winding reels 30a, 30b (in Figure 1, the web 7 is being wound around the reel 30a) , and a reel exchanger 26 including a motor 25. The reel exchanger 26 is provided with a reel holding lever 31 turnalbly holding the reels 30a and 30b, and a detector 32 for measuring the amount of the web 7 wound around the reel 30a or 30b. When the amount of the wound web 7 reaches a predetermined value, the detector 32 outputs electrical signals by detecting the position of the surface of the outermost convolution of the wound web 7. A lever 34 holding the nip roller 29 turns under the control of a lever controlling unit 35, for example, having a solenoid. In Figure 1, the nip roller 29 is in nipping position to press the web 7 towards the shaft of the reel 30a. Because the nip roller 29 is also driven by the motor 27, the reel 30a rotates clockwise, winding the web 7 around its shaft. When the lever controlling unit 35 operates by instructions of the sequential controller 12, the lever rotates clockwise to move the nip roller 29 away from the surface of the web 7 to the evacuating position.

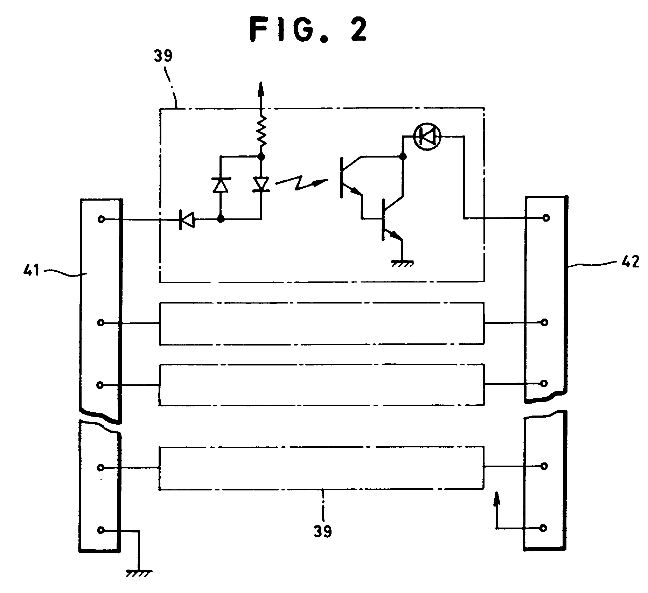

The sequential controller 12, as described above, sends command signals to the web-supplying block 2, the emulsion-applying block 3, inspection block 4, and web-winding block 5 and receives signals from the blocks 2, 3, 4, and 5. A microcomputer 40 is connected with the sequential controller 12 through an isolator 37 and an interface unit 38. The isolator 37 is a signal transmission unit comprising, for example, a photocoupler 39 as shown in Figure 2 and is connected between two terminal boards; a terminal board 41 of the sequential controller 12, and a terminal board 42 of the interface unit 38.

To the microcomputer 40, a CRT 45 and a printer 46 as output units, and a floppy disk drive unit 47 (which is hereinafter referred to as FD 47) as an auxiliary memory are connected. The microcomputer 40 electrically scans the states of the signals from the working blocks so as to monitor the changes of the states of the signals. For increasing the processing and scanning speeds, a timer board may be provided in the microcomputer 40, or the program may be described in an assembly language, particularly part of the program to which higher speed of processings is necessary. Explanation about other detectors such as a microswitch which generates signals is omitted.

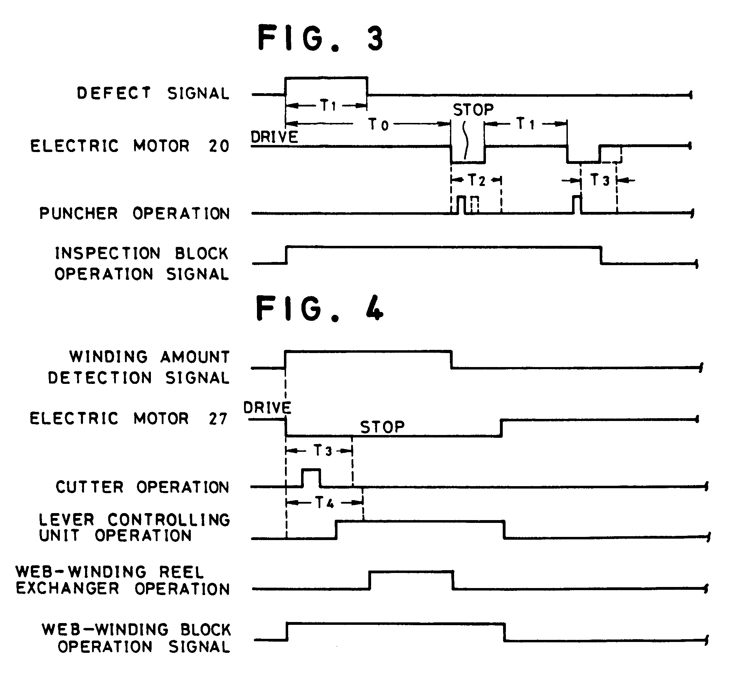

Next, the operation of the embodiment will be described in detail. When the production line is started to operate, the motors 9, 20, and 27 in the blocks are driven for transferring the web 7. The web 7 is firstly drawn from the web supplying reel 8 in the web-supplying block 2 and transferred to the emulsion applying block 3. The line sensor 11 detects the leading end of the web 7 and measures its width to output the electrical signals representing the detection and width to the sequential controller 12. Corresponding to the reception of the signals, the sequential controller 12 feeds control signals to the applier 14 for setting the width of emulsion application according to the size of the web 7, and for opening the nozzle 13 when the leading end of the web 7 reaches the position just under the nozzle 13. In this way, on the surface of the web 7, an emulsion layer having a constant width and a constant thickness are provided. In the inspection block 4, the applied web 7 is checked for unevenly applied area with the light-emitting and -receiving units 15, 16. If the unevenly applied area is detected, the output of the light-receiving unit 16 increases in its value over the predetermined threshold level. The change is digitally converted to binary coded signals to making a defect signal as shown in Figure 3. The leading edge of the defect signal corresponds to the beginning of the unevenly applied area and the trailing edge, to the end.

When the sequential controller 12 receives such defect signal, the controller 12 stops the driving of the motor 20 after the time T₀ predetermined based on the transferring speed of the web 7. The beginning of the unevenly applied area is accordingly placed just under the puncher 17.

Upon receiving a punching-end signal from the puncher 17, the sequential controller 12 drives again the motor 20. After the time T₁ corresponding to the duration of the defect signal from the moment of the start of the re-driving of the motor 20, the sequential controller 12 stops again the motor 20. Then, the puncher 17 makes a hole at the end of the unevenly applied area. After this punching, the normal transferring of the web 7 is started again.

After passing through the inspection block 4, the web 7 is lastly transferred to the web-winding block 5 to be wound around the web-winding reel 30a. When the detector 32 detects that the amount of the wound web 7 reaches to the predetermined value of the full amount, the detector 32 outputs winding amount detection signal shown in Figure 4 to the sequential controller 12. Corresponding to the reception of the signal, the sequential controller 12 starts reel-exchanging operation. That is, the controller 12 outputs a signal which stops the driving of the motor 27. After the stop of the motor 27, the cutter 24 cuts the web 7. When the seqeuntial controller 12 receives the cutting-end signal from the cutter 24, the controller 12 operates the lever controlling unit 35 to turn the lever clockwise by a predetermined angle, moving the nip roller 29 to the evacuating position. After the sequential controller 12 confirms the operation of the lever controlling unit 35, namely, the movement of the nip roller 29 to the evacuating position, the sequential controller 12 outputs operation signal to the reel exchanger 26. By the signal, the motor rotates by a predetermined amount of rotation. In this way, the reel 30a with the predetermined full amount of the web 7 is evacuated and new web-winding reel 30b without web wound around its shaft is set at the winding position.

When the sequential controller 12 receives the setting-end signal from the lever controlling unit 35 at the end of the setting of the new reel 30b, the controller 12 sends operation-stop signal to the lever controlling unit 35 to press the nip roller towards the shaft of the reel 30b. The web 7 is now wound around the new reel 30b. The reel-exchanging operation of the web-winding block 5 is completed at the moment of re-starting of the driving of the motor 27. The web-winding reel 30a which has fully wound the web 7 is take off from the reel-holding lever 31 afterwards and a new empty reel is set instead.

In the production line described above, since there is no mutual relations between the blocks, there is no sequential control of the sequential controller 12 between the blocks, for example, between the emulsion-applying block 3 and the inspection or web winding block 4 or 5, and between the inspection block 4 and the web-winding block 5. In order to check for normal operation of the production line, the signals are sent through the isolator 37 and the interface unit 38 to the microcomputer 40. The microcomputer 40 monitors the timings of the signals which are sent or received between the working blocks and the sequential controller 12, thus judging the working state of each working block of the production line. The monitoring can be separately performed for each block.

The data used for judging whether the sequential operations of the blocks are normal or not are automatically sampled by the microcomputer 40 through the sequence controller 12. For example, while the inspection block operation signal (Figure 3) is fed to the inspection block 4, the order of the outputtings and time intervals of signals shown in Figure 3 from the inspection block 4 are stored in the memories incorporated in the microcomputer 40.

This sampling of the signals is performed according to a data sampling program stored in the microcomputer 40. The signals of, for example, the sequential works of the inspection block 4 are sampled ten times each time the inspection block 4 operates and written in the address areas. After the sampling, the average value of the time intervals are calculated: the time from the moment of the outputting of the defect signal and to the moment of the stop of the motor 20; the time from the stop of the motor 20 to the start of the operation of the puncher 17; and the time from the start of the operation of the puncher 17 to the re-start of the motor 20. The calculated average values are stored as the reference time interval. Values of the reference deviations are also calculated from the values of the standard deviations of the time intervals obtained by the sampling and stored in the memories of the microcomputer 40. In the embodiment, after the third sampling, the monitoring of the sequential works are carried out simultaneously with the sampling. The order of the signals may be determined based on the first sampling.

After storing the order, reference time, and reference deviations of the sequential works in the inspection block 4 as a sequence pattern, the data of the inspection block 4 in operation are compared with the stored sequence pattern. In the same way, the sequence pattern for the web-winding block 5 are automatically made by the microcomputer 40.

In Figure 3, the sequence pattern for the inspection block 4 is illustrated by solid lines in the case that unevenly applied area is detected. T₂ shows the average time interval, as an allowable reference deviation, from the stop of the motor 20 to the start of the puncher 17. Even if the puncher starts to operate as shown by broken lines, the timing of the start is judged to be normal. T₃ shows the allowable time interval from the end of the puncher operation to the re-start of the driving of motor 20. If the motor 20 re-starts at the timing shown by broken lines after the puncher 17 has made a hole at the end of the unevenly applied area, the work is judged to be abnormal.

The microcomputer 40 has various working modes: emergency monitoring mode; order monitoring mode; interval monitoring mode; order and interval monitoring mode; and printing mode. Therefore, corresponding to the features and characteristics of the works of each working blocks, the microcomputer 40 can monitor each working block simultaneously in particular monitoring mode.

In the emergency monitoring mode, a block is monitored whether seriously abnormal working state will occur. An example of the serously abnormal state is that the motor 20 will not stop even though a defect signal is output from the inspection block 4. Another is that the puncher 17 starts to operate before the motor 20 stops. If such a seriously abnormal state occurs, all operations of the working blocks are urgently stopped and all of the data of the signals from the blocks for one minute (this time is changeable) before and after the occurence of the abnormal state are printed out with the printer 46 for analysis.

In the order monitoring mode, a block is monitored with respect to the order of the outputting of the signals sequentially output from the sequential controller 12. As for, for example, the operation of the web-winding block 5, the order of the works are: (1) detection of the amount of the web 7 wound around the reel 30a or 30b; (2) stop of the motor 27; (3) operation of the cutter 24; (4) operation of the lever controlling unit 35.

In the interval monitering mode, for example, it is monitored whether the operations of the cutter 24 and the lever controlling unit 35 start within the respective reference deviations T₃, T₄. When the timing exceeds the reference deviations, the microcomputer judges that the operations are not normal. In this mode, the order of the operations of the cutter 24 and the lever controlling unit 35 are no matter.

In th order and interval monitoring mode, the order and the time intervals, for example, of the operations of the cutter 24 and the lever controlling unit 35 are monitored.

In the printing mode, various kinds of signal data are printed out by the printer 46. For example, the signals themselves, the times, and kinds are output when the levels of the signals change. This kind represents the names of the block and work thereof. For monitoring the signals, the printing mode may be also set even though there are no abnormal working state. Therefore, before serious trouble occurs, the premonitory signs can be found. If the premonitory signs is found, the production line is manually stopped for inspection. The premonitory signs may be automatically detected and in this case, the production line may be also automatically stopped.

When abnormal state is detected in any monitoring mode of the microcomputer 40, the data, that is, kind of abnormality (order or interval), name of an abnormal block, and so forth are displayed on the CRT 45 and are printed out by the printer 46. Further, the data are written on a floppy disk in the FD 47 for future analysis of the abnormal state. The data before and after the occurence of the abnormality may be included.

It should be noted that the monitoring mode can be selected freely for each working block or that one mode can be used for all working blocks.

In this embodiment, though the signals from the blocks are send to the microcomputer 40 through the sequence controller 12, the signals may be directly fed to the microcomputer 40.

## Claims

1. A method of sequential monitoring to monitor a production line which includes a plurality of working blocks (2,3,4,5) whose work operations are controlled by a sequential controller (12), comprising the steps of:
receiving electrical signals from detectors (11,16,32), at least one of said detectors being provided in one or more of the plurality of working blocks (2,3,4,5) distributed along said production line, each of said working blocks performing a different sequence of work operations;
storing said received signals representative of the time-intervals of said electrical signals; and
monitoring the working condition of at least one of said working blocks by comparing said electrical signals received with a given program representative of the desired results to be obtained from said at least one working block,
**characterised in that**
the step of storing said received signals includes the step of sampling and storing a number of times data representative of the order of outputting as well as the time-intervals of the electrical signals produced for each working pattern of a sequential works carried out during operation of a particular working block being monitored; and by then comprising the step of,
calculating a reference value for each time-interval within said working pattern of the sequential works; and
producing, after said reference value calculating step and before said monitoring step, said program in the form of a sequence pattern for said block being monitored based on said stored data and said calculated reference values.

2. A method of sequential monitoring as claimed in claim 1, wherein said reference values are calculated by taking an average of the values sampled for each time-interval within said working pattern.

3. A method of sequential monitoring as claimed in claim 1 or 2, wherein said monitoring step includes judging whether each of said particular working blocks is in an abnormal state or normal state.

4. A method of sequential monitoring as claimed in claim 3, further including a step of stopping the operation of the production line when a working state of the particular working block is judged to be in an abnormal state.

5. A method of sequential monitoring as claimed in claim 4, further including a step of outputting a second data made from said electrical signals by output units including CRT, printer.

6. A method of sequential monitoring as claimed in claim 4, further including a step of storing a second data made from said electrical signals on a storing member including a floppy disk.

7. A method of sequential monitoring as claimed in claim 5 or 6, wherein said second data includes data of normal and abnormal states of said particular working blocks and data representing which work is abnormal.

8. Sequential monitoring apparatus to monitor a production line which includes a plurality of working blocks (2,3,4,5) whose work operations are controlled by a sequential controller (72), comprising:
at least one detector (11,16,32) provided in one or more of a plurality of working blocks (2,3,4,5) distributed along said production line, each of said working blocks includes a different sequence of work operations and said at least one detector outputs an electrical signal(s) representing each work operation;
storage means (40) for storing signals received from each detector representative of the time-intervals of said electrical signals; and
means for monitoring (40) the working condition of said at least one of said working blocks by comparing said electrical signal(s) received with a given program representative of the desired results to be obtained from said at least one working block,
**characterised in that**
said storage means (40) also includes sampling means for sampling and storing a number of times data representative of the order of outputting as well as the time-intervals of the electrical signals produced for each working pattern of a sequential works carried out during operation of a particular working block being monitored; and by further comprising,
calculating means (40) for calculating a reference value for each time-interval within said working pattern of the sequential works being sampled; and
means (40) for producing said program in the form of a sequence pattern for said block being monitored based on said stored data and said calculated reference values.

9. A sequential monitoring apparatus as claimed in claim 8, wherein said calculating means (40) calculates said reference values by taking an average of the values sampled for each time-interval within said working pattern.

10. A sequential monitoring apparatus as claimed in claim 8 or 9, further comprising means (40) for storing said sequence pattern.

11. A sequential monitoring apparatus as claimed in claim 8, 9 or 10, wherein said monitoring means (40) stops all of the works of those working blocks for which a working state is judged to be abnormal from the result of the monitoring.

12. A sequential monitoring apparatus as claimed in claims 8 to 11, wherein said monitoring means (40) is a microcomputer.

13. A sequential monitoring apparatus as claimed in claim 12, wherein said microcomputer outputs data made from said electrical signals to output means.

14. A sequential monitoring apparatus as claimed in claim 13, wherein said output means includes a CRT (45) and a printer (46).

15. A sequential monitoring apparatus as claimed in claim 13, further including external storage (47) for storing said data.

16. A sequential monitoring apparatus as claimed in claim 15, wherein said external storage is a floppy disk.

## Patentansprüche

1. Ein Verfahren zum sequentiellen Überwachen einer Produktionslinie, welche eine Vielzahl von Arbeitsblöcken (2, 3, 4, 5) enthält, deren Arbeitstätigkeiten durch eine Sequenzsteuerung (12) gesteuert werden, mit den Verfahrensschritten:
Empfangen elektrischer Signale von Detektoren (11, 16, 32), wobei wenigstens einer der Detektoren in einem oder mehreren aus der Vielzahl von entlang der Produktionslinie verteilten Arbeitsblöcken (2, 3, 4, 5) verteilt vorgesehen ist und jeder von den Arbeitsblöcken eine unterschiedliche Folge von Arbeitstätigkeiten ausführt;
Speichern der empfangenen Signale, die für die Zeitintervalle der elektrischen Signale repräsentativ sind; und
Überwachen der Arbeitsbedingung von wenigstens einem der Arbeitsblöcke durch Vergleichen der empfangenen elektrischen Signale mit einem gegebenen Programm, das repräsentativ für die gewünschten, von der wenigstens einen Arbeitsblock zu erhaltenden Ergebnisse ist,
**dadurch gekennzeichnet,**
daß der Schritt der Speicherung der empfangenen Signale den Schritt der Abtastung und Speicherung einer Anzahl von Zeitdaten enthält, die sowohl repräsentativ für die Reihenfolge der Ausgabe als auch der Zeitintervalle der elektrischen Signale sind, die für jedes Arbeitsmuster sequentiellen Arbeiten, die während des Betriebs eines besonderen Arbeitsblocks, der überwacht wird, ausgeführt werden; und das Verfahren dann den Schritt umfaßt:
Berechnen eines Referenzwertes für jedes Zeitintervall innerhalb des Arbeitsmusters der sequentiellen Arbeiten; und
Erzeugen, nach dem Referenzwertberechnungsschritt und vor dem Überwachungschritt, des Programms in der Form eines Sequenzmusters für den Block, der überwacht wird, basierend auf den gespeicherten Daten und den berechneten Referenzwerten.

2. Ein Verfarhen zum sequentiellen Überwachen nach Anspruch 1, wobei die Referenzwerte durch Bilden eines Mittelwertes der für jedes Zeitintervall innerhalb des Arbeitsmusters abgetasteten Werte berechnet werden.

3. Ein Verfahren zum sequentiellen Überwachen nach Anspruch 1 oder 2, wobei der Überwachungsschritt die Beurteilung enthält, ob jeder von den besonderen Arbeitsblocks in einem anomalen Zustand oder einem normalen Zustand ist.

4. Ein Verfahren zum sequentiellen Überwachen nach Anspruch 3, welches ferner den Schritt des Stoppens des Betriebs der Produktionslinie enthält, wenn ein Arbeitszustand des besonderen Arbeitsblocks als in einem anomalen Zustand befindlich beurteilt wird.

5. Ein Verfahren zum sequentiellen Überwachen nach Anspruch 4, welches ferner einen Schritt der Ausgabe eines zweiten, aus den elektrischen Signalen gebildeten Datensignals durch eine Kathodenstrahlröhre und einen Drucker enthaltende Ausgabeeinheiten enthält.

6. Ein Verfahren zum sequentiellen Überwachen nach Anspruch 4, welches ferner einen Schritt der Speicherung zweiter, aus den elektrischen Signalen gebildeter Daten in einer eine Floppy-disk enthaltenden Speichereinrichtung enthält.

7. Ein Verfahren zum sequentiellen Überwachen nach Anspruch 5 oder 6, wobei die zweiten Daten Daten von normalen und anomalen Zuständen der besonderen Arbeitsblöcke und Daten, die repräsentieren, welche Arbeit anomal ist, enthalten.

8. Vorrichtung zum sequentiellen Überwachen einer Produktionslinie, welche eine Vielzahl von Arbeitsblöcken (2, 3, 4, 5) enthält, deren Arbeitstätigkeiten durch eine Sequenzsteuerung (72) gesteuert werden, mit:
wenigstens einem Detektor (11, 16, 32) der in einem oder mehreren von einer Vielzahl von Arbeitsblöcken (2, 3, 4, 5), die entlang einer Produktionslinie verteilt sind, vorgesehen ist, wobei jeder der Arbeitsblöcke eine unterschiedliche Folge von Arbeitstätigkeiten enthält und der wenigstens eine Detektor ein jede Arbeitstätigkeit repräsentierendes elektrisches Signal(e) ausgibt;
einer Speichereinrichtung (40) zum Speichern von Signalen, die von jedem Detektor empfangen werden und für die Zeitintervalle der elektrischen Signale repräsentativ sind; und
eine Einrichtung (40) zum Überwachen der Arbeitsbedingung von wenigstens einem der Arbeitsblöcke durch Vergleichen des empfangenen elektrischen Signals (der Signale) mit einem gegebenen Programm, das für die gewünschten, von dem wenigstens einen Arbeitsblock zu erhaltenden Resultate repräsentativ ist,
**dadurch gekennzeichnet,**
daß die Speichereinrichtung (40) auch Abtastmittel zum Abtasten und Speichern eines Anzahl von Zeitdaten enthält, welche sowohl für die Reihenfolge der Ausgabe als auch die Zeitintervalle der elektrischen Signale repräsentativ sind, die für jedes Arbeitsmuster sequentieller Arbeiten erzeugt werden, die während des Betriebs eines besonderen Arbeitsblocks, der überwacht wird, ausgeführt werden; und daß die Vorrichtung ferner umfaßt:
eine Berechnungseinrichtung (40) zum Berechnen eines Referenzwertes für jedes Zeitintervall innerhalb des Arbeitsmusters der sequentiellen Arbeiten, die abgetastet werden; und
eine Einrichtung (40) zum Erzeugen des Programms in der Form eines Sequenzmusters für den Block, der überwacht wird, basierend auf den gespeicherten Daten und den berechneten Referenzwerten.

9. Eine sequentielle Überwachungsvorrichtung nach Anspruch 8, wobei die Berechnungseinrichtung (40) die Referenzwerte durch Bilden eines Mittelwertes der Werte berechnet, welche für jedes Zeitintervall Innerhalb der Arbeitsmusters abgetastet werden.

10. Eine sequentielle Überwachungsvorrichtung nach Anspruch 8 oder 9, welche ferner eine Einrichtung (40) zum Speichern des Sequenzmusters umfaßt.

11. Eine sequentielle Überwachungsvorrichtung nach Anspruch nach Anspsurch 8, 9 oder 10, wobei die Überwachungseinrichtung (40) alle Arbeiten solcher Überwachungsblöcke, für welche ein Arbeitszustand als anomal im Ergebnis der Überwachung beurteilt worden ist, stoppt.

12. Eine sequentielle Überwachungsvorrichtung nach einem der Ansprüche 1 bis 11, wobei die Überwachungseinrichtung (40) ein Mikrocomputer ist.

13. Eine sequentielle Überwachungsvorrichtung nach Anspruch 12, wobei der Mikrocomputer Daten, welche aus den elektrischen Signalen gebildet sind, an eine Ausgabeeinrichtung ausgibt.

14. Eine sequentielle Überwachungsvorrichtung nach Anspruch 13, wobei die Ausgabeeinrichtung eine Kathodenstrahlröhre (40) und einen Drucker (46) enthält.

15. Eine sequentielle Überwachungsvorrichtung nach Anspruch 13, welche ferner einen externen Speicher (47) zum Speichern der Daten enthält.

16. Eine sequentielle Überwachungsvorrichtung nach Anspruch 15, wobei der externe Speicher eine Floppy-disk ist.

## Revendications

1. Procédé de contrôle séquentiel visant à contrôler une chaîne de production qui comporte une pluralité de postes de travail (2, 3, 4, 5) dont les opérations sont commandées par un dispositif de commande séquentiel (12), comprenant les étapes suivantes :
recevoir des signaux électriques de la part de détecteurs (11, 16, 32), au moins un desdits détecteurs étant prévu dans un ou plusieurs postes de la pluralité de postes de travail (2, 3, 4, 5) répartis le long de ladite chaîne de production, chacun desdits postes de travail effectuant une séquence différente d'opérations ;
mémoriser des signaux reçus représentatifs des intervalles de temps desdits signaux électriques ; et
contrôler l'état opératoire d'au moins un desdits postes de travail en comparant lesdits signaux électriques reçus avec un programme donné représentatif des résultats que l'on souhaite obtenir de la part de ce poste de travail,
caractérisé en ce que :
l'étape de mémorisation desdits signaux reçus comporte l'étape consistant à échantillonner et mémoriser un certain nombre de données temporelles représentatives de l'ordre de délivrance ainsi que des intervalles de temps des signaux électriques produits pour chaque schéma opératoire d'opérations séquentielles effectuées pendant la marche d'un poste de travail particulier soumis au contrôle ; et en ce qu'il comprend ensuite l'étape consistant à
calculer une valeur de référence pour chaque intervalle de temps à l'intérieur dudit schéma opératoire des opérations séquentielles ; et
produire, après ladite étape de calcul des valeurs de référence et avant ladite étape de contrôle, ledit programme sous la forme d'un schéma de séquence pour ledit bloc soumis au contrôle sur la base desdites données mémorisées et desdites valeurs de référence calculées.

2. Procédé de contrôle séquentiel selon la revendication 1, où on calcule lesdites valeurs de référence en prenant la moyenne des valeurs échantillonnées pour chaque intervalle de temps à l'intérieur dudit schéma opératoire.

3. Procédé de contrôle séquentiel selon la revendication 1 ou 2, où ladite étape de contrôle comporte l'étape consistant à déterminer si chacun desdits postes de travail particuliers se trouve dans un état anormal ou un état normal.

4. Procédé de contrôle séquentiel selon la revendication 3, comportant en outre l'étape consistant à arrêter le fonctionnement de la chaîne de production lorsqu'un état de fonctionnement du poste de travail particulier est déterminé comme étant un état anormal.

5. Procédé de contrôle séquentiel selon la revendication 4, comportant en outre l'étape consistant à faire délivrer une deuxième donnée, réalisée à partir desdits signaux électriques, par des unités de sortie comportant un tube à rayons cathodiques, une imprimante.

6. Procédé de contrôle séquentiel selon la revendication 4, comportant en outre l'étape consistant à mémoriser une deuxième donnée, réalisée à partir desdits signaux électriques, sur un élément de mémorisation comportant une disquette.

7. Procédé de contrôle séquentiel selon la revendication 5 ou 6, où ladite deuxième donnée comporte une donnée d'états normaux et anormaux desdits blocs de travail particuliers et une donnée indiquant quelle opération est anormale.

8. Appareil de contrôle séquentiel visant à contrôler une chaîne de production qui comporte une pluralité de postes de travail (2, 3, 4, 5) dont les opérations sont commandées par un dispositif de commande séquentiel (72), comprenant :
au moins un détecteur (11, 16, 32) prévu dans un ou plusieurs postes d'une pluralité de postes de travail (2, 3, 4, 5) répartis le long de ladite chaîne de production, chacun desdits postes de travail comportant une séquence différente d'opérations, et ledit ou lesdits détecteurs délivrant un ou des signaux électriques représentant chaque opération ;
un moyen de mémorisation (40) servant à mémoriser des signaux reçus de la part de chaque détecteur, qui sont représentatifs des intervalles de temps desdits signaux électriques ; et
un moyen (40) servant à contrôler l'état opératoire d'au moins un desdits postes de travail en comparant ledit ou lesdits signaux électriques avec un programme donné représentatif des résultats que l'on désire obtenir de la part de ce poste de travail,
caractérisé en ce que :
ledit moyen de mémorisation (40) comporte également un moyen d'échantillonnage destiné à échantillonner et mémoriser un certain nombre de données temporelles représentatives de l'ordre de délivrance ainsi que des intervalles de temps des signaux électriques produits pour chaque diagramme opératoire d'opérations séquentielles effectuées pendant le fonctionnement d'un poste de travail particulier soumis au contrôle ; et en ce qu'il comprend en outre
un moyen de calcul (40) servant à calculer une valeur de référence pour chaque intervalle de temps à l'intérieur dudit schéma opératoire des opérations séquentielles qui ont été échantillonnées ; et
un moyen (40) servant à produire ledit programme sous la forme d'un schéma de séquence pour ledit poste soumis au contrôle sur la base desdites données mémorisées et desdites valeurs de référence calculées.

9. Appareil de contrôle séquentiel selon la revendication 8, où ledit moyen de calcul (40) calcule lesdites valeurs de référence en prenant la moyenne des valeurs échantillonnées pour chaque intervalle de temps à l'intérieur dudit schéma opératoire.

10. Appareil de contrôle séquentiel selon la revendication 8 ou 9, comprenant en outre un moyen (40) servant à mémoriser ledit schéma de séquence.

11. Appareil de contrôle séquentiel selon la revendication 8, 9 ou 10, où ledit moyen de contrôle (40) arrête toutes les opérations des postes de travail pour lesquels un état de fonctionnement a été déterminé comme étant anormal à partir du résultat du contrôle.

12. Appareil de contrôle séquentiel selon les revendications 8 à 11, où ledit moyen de contrôle (40) est un micro-ordinateur.

13. Appareil de contrôle séquentiel selon la revendication 12, où ledit micro-ordinateur délivre des données, réalisées à partir desdits signaux électriques, à un moyen de sortie.

14. Appareil de contrôle séquentiel selon la revendication 13, où ledit moyen de sortie comporte un tube à rayons cathodiques (45) et une imprimante (46).

15. Appareil de contrôle séquentiel selon la revendication 13, comportant en outre une mémoire externe (47) servant à mémoriser lesdites données.

16. Appareil de contrôle séquentiel selon la revendication 15, où ladite mémoire externe est une disquette.
